# EUROPÄISCHE PATENTSCHRIFT

(11) **EP 2 913 599 B1**
(45) Veröffentlichungstag und Bekanntmachung des Hinweises auf die Patenterteilung: **25.09.2019**
(21) Anmeldenummer: 15156655.1
(22) Anmeldetag: 26.02.2015
(51) Int. Cl.: F24F 3/14, F24F 6/14, F24F 12/00

(54) **Klimatisierungseinrichtung**
Air conditioning device
Dispositif de climatisation

(30) Priorität: 28.02.2014 DE 102014102735
(43) Veröffentlichungstag der Anmeldung: 02.09.2015
(73) Patentinhaber: Bugiel, Jürgen, 79592 Fischingen bei Lörrach (DE)
(72) Erfinder: Michelbach, Ludwig, 90513 Zirndorf (DE)
(74) Vertreter: Zech, Stefan Markus

(56) Entgegenhaltungen:
- WO-A1-2013/131436
- CN-U- 201 513 990
- US-A1- 2010 012 291

## Beschreibung

Die Erfindung betrifft eine Klimatisierungseinrichtung zum Konditionieren eines in einem Zuluftkanal geführten Luftstrom zur Klimatisierung eines Raums, wobei der Zuluftkanal ein einlassseitiges Ende und ein auslassseitiges Ende und einen dazwischen angeordneten Düsenstock zur bedarfsweisen Befeuchtung des Luftstroms aufweist, wobei im Zuluftkanal abstromseitig des Düsenstocks ein vom Luftstrom durchströmbar ausgebildeter Hauptwärmetauscher angeordnet ist und Anschlüsse zum Durchleiten eines Wärme- und/oder Kältefluids, das jeweils aus einer Wärmequelle bzw. einer Kältequelle stammt, vorgesehen sind, wobei im Zuluftkanal zwischen einlassseitigem Ende und Düsenstock ein mit Wärmerückgewinnungseinrichtung in Wirkzusammenhang stehender Vorwärmetauscher angeordnet ist.

Weiterhin betrifft die Erfindung ein Verfahren zum Konditionieren eines in einem Zuluftkanal geführten Luftstroms zur Klimatisierung eines Raums.

Derartige Klimatisierungseinrichtungen bzw. ein derartiges Verfahren zum Betreiben einer Klimatisierungseinrichtung sind aus dem Stand der Technik bekannt, beispielsweise aus der CN 201 513 990 U oder der WO 2013/131436 A1.

Die Aufgabe der vorliegenden Erfindung besteht darin, eine derartige Klimatisierungseinrichtung bzw. ein derartiges Verfahren derart weiterzubilden, dass unter Einhaltung einer vergleichsweise kurzen Gesamtbaulänge die Energieeffizienz erhöht wird und gleichzeitig ein schonender Ressourceneinsatz gegeben ist.

Diese Aufgabe wird mit einer Klimatisierungseinrichtung nach den Merkmalen des Anspruchs 1sowie einem Verfahren nach den Merkmalen des Anspruchs 17 gelöst. Vorteilhafte Weiterbildungen sind in den Unteransprüchen angegeben.

Der Hauptwärmetauscher der Klimatisierungseinrichtung nach der vorliegenden Erfindung ist bevorzugtermaßen so ausgebildet, dass er in mindestens fünf verschiedenen Klimatisierungsmodi betrieben werden kann: In einem Aufheizmodus wird die durch den Zuluftkanal geführte Zuluft erwärmt. In einem Befeuchtungsmodus wird die im Zuluftkanal geführte Zuluft, die über einen Düsenstock mit einem Aerosolnebel versetzt ist, durch Verdunstung der Aerosolpartikel im Hauptwärmetauscher befeuchtet. In einem Kühlmodus wird die durch den Zuluftkanal geführte Zuluft im Hauptwärmetauscher gekühlt.

In einem Entfeuchtungsmodus wird die durch den Zuluftkanal geführte Zuluft über den Taupunkt abgekühlt derart, dass Kondenswasser austritt und dieses abgeführt wird. Die Zuluft wird in diesem Modus also entfeuchtet. Ein fünfter Klimatisierungsmodus wird durch einen Abtrocknungsmodus definiert. In diesem Abtrocknungsmodus wird der Hauptwärmetauscher erhitzt derart, dass im Hauptwärmetauscher und in anliegenden Bereichen alle Feuchtigkeit abverdunstet. Die Feuchtigkeit kann insbesondere über einen separaten Kanal unter Einstellung eines geringen Luftstroms über entsprechende Ansteuerung der Ventilatoren abgeführt werden.

Nach einem ersten Aspekt der vorliegenden Erfindung besteht ein Kerngedanke darin, dass ein Umschaltorgan, insbesondere ein oder mehrere Mehrwegeventile vorgesehen ist, dass dazu ausgebildet und eingerichtet ist, die von der Wärmerückgewinnungseinrichtung gewonnene Energie wahlweise dem Wärmetauscher und/oder einem Enteisungswärmetauscher bzw. dem Vorwärmetauscher zuzuführen. Durch diesen Gesamtaufbau, insbesondere das Umschaltorgan, kann die über die Wärmerückgewinnungseinrichtung genutzte Wärme wesentlich universeller und abhängig von den gegebenen Witterungsbedingungen (Außenluft, Außenfeuchte) sowie den jeweiligen Klimatisierungsanforderungen (gewünschte Raumtemperatur, gewünschte Raumfeuchte) sowie dem Betriebszustand der Wärmerückgewinnungseinrichtung genutzt werden.

Nach einem zweiten Aspekt der vorliegenden Erfindung besteht ein Kerngedanke darin, dass bei zugeschalteter Wärmerückgewinnungseinrichtung die aus der Wärmerückgewinnungseinrichtung gewonnene Wärme entweder in einem ersten Betriebszustand WRGA1 sowohl dem Hauptwärmetauscher als auch dem Enteisungswärmetauscher und/oder dem Vorwärmetauscher oder in einem Betriebszustand WRGA2 bzw. WRGA3 nur dem Hauptwärmetauscher oder nur dem Enteisungswärmetauscher und/oder dem Vorwärmetauscher, zugeführt wird und wobei bei ausgeschalteter Wärmerückgewinnungseinrichtung das mit Wärme aus der Wärmequelle bzw. Kälte aus der Kältequelle beaufschlagte Wärme- bzw. Kältefluid in einem ersten Betriebszustand WRGB1 sowohl dem Hauptwärmetauscher als auch dem Enteisungswärmetauscher und/oder dem Vorwärmetauscher oder in einem Betriebszustand WRGB2 bzw. WRGB3 nur dem Hauptwärmetauscher oder nur dem Enteisungswärmetauscher und/oder dem Vorwärmetauscher zugeführt wird.

Klarstellend wird darauf hingewiesen, das die Erfindung nach diesem zweiten Aspekt bereits dann realisiert ist, wenn sich mindestens einer der genannten Betriebszustände der beim Rückgewinnungseinrichtung, also (WRGA1, WRGA2, WRGA3 bzw. WRGB1, WRGB2, WRGB3) einstellen lässt. Vorteilhafterweise lassen sich mehrere oder alle der genannten Betriebszustände einstellen.

Ganz allgemein wird darauf hingewiesen, dass nach einem besonderen, bevorzugten Aspekt der Erfindung der Hauptwärmetauscher auch noch eine weitere Funktion erfüllt: Er wirkt nämlich als Tropfenabscheider. Ein separater Tropfenabscheider, wie er bei herkömmlichen Anlagen, die mit eingedüsten Aerosolpartikeln arbeiten, notwendig ist, kann beim vorliegenden Aufbau entfallen.

Weiterhin wird darauf hingewiesen, dass bevorzugtermaßen mehrere gleichartige Wärmetauscher im Querschnitt des Luftkanals übereinanderliegend angeordnet sind. Bei einem Höhenquerschnitt des Luftkanals von beispielsweise 2,50 m können drei bis vier Wärmetauscher übereinander angeordnet werden. Bevorzugterweise werden sie im Tichelmann-System angeschlossen. Der Hintergrund des Vorsehens mehrerer fluidtechnisch parallel zueinander angeschlossener Wärmetauscher, die vorzugsweise im Tichelmann-System, also unter Beachtung gleich langer Fluidwege, angeschlossen sind, verhindert, dass sich eine Schichtung über den Querschnitt des Luftkanals ausbildet. Bei herkömmlichen Aufbauten besteht ein erhebliches Problem einer Schichtung. Dort sind oft die oberen Bereiche des Luftkanals wärmer als untere Bereiche mit der Folge, dass die Gesamtanlage ineffizient arbeitet.

Nach einem dritten Aspekt der vorliegenden Erfindung besteht ein weiterer Kerngedanke darin, das über den Hauptwärmetauscher geführte Wärme- oder Kältefluid getrennt vom Frostschutzwärmefluid, das durch den Enteisungswärmetauscher strömt, zu führen bzw. vorzusehen. Während herkömmlicherweise das über den Hauptwärmetauscher geführte Wärmefluid, wenn es gleichzeitig zur Erwärmung des Enteisungswärmetauschers dienen sollte, als Frostschutzwärmefluid vorgesehen werden musste, ist nunmehr vorgesehen innerhalb oder außerhalb des Zuluftkanals ein Fluid-Fluidwärmetauscher anzuordnen, der zur Übertragung von Wärme des Wärmefluids an das Frostschutzwärmefluid ausgebildet ist, wobei der Fluid-Fluidwärmetauscher so ausgebildet ist, dass Wärmefluid und Frostschutzfluid innerhalb des Fluid-Fluidwärmetauschers voneinander getrennt geführt sind. Verfahrensmäßig ist dementsprechend vorgesehen, dass das Frostschutzwärmefluid durch ein getrennt geführtes Wärmefluid erwärmt wird.

Ein unabhängiger Verfahrensaspekt der vorliegenden Erfindung liegt darin begründet, das bedarfsweise eine Wärmerückgewinnungseinrichtung zu- oder abschaltbar ist und die aus der Wärmerückgewinnungseinrichtung gewonnene Wärme im Bedarfsfall wahlweise einem nach einer Hochdruckbefeuchtungseinrichtung vorgesehenen Hauptwärmetauscher und/oder dem Frostwärmetauscher bzw. dem Vorwärmetauscher zugeführt wird.

Die erfindungsgemäße Vorrichtung bzw. das erfindungsgemäße Verfahren bringen zwei Vorteile mit sich: Zum einen lässt sich die aus einer Wärmerückgewinnungseinrichtung gewonnene Wärme wesentlich zielgerichteter und abhängig von den aktuell gegebenen Bedingungen einsetzen, zum anderen kann der Einsatz von Frostschutzwärmefluid auf ein notwendiges Maß reduziert werden. Frostschutzwärmefluide sind meistens relativ teuer und nur bedingt umweltverträglich. Darüber hinaus sind Wärmeleitfähigkeit und Wärmekapazität von herkömmlicherweise eingesetzten Frostschutzfluiden der Wärmeleitfähigkeit und Wärmekapazität von Wasser unterlegen. Insofern kann zur Erwärmung bzw. zur Abkühlung des Hauptwärmetauschers Wasser vorgesehen werden, wobei sich durch die höhere Wärmekapazität bzw. höhere Wärmeleitfähigkeit die Energieeffizienz steigern lässt; nur zur Erwärmung des Enteisungswärmetauschers wird in einer ersten möglichen Ausgestaltung das Frostschutzfluid eingesetzt. In einer anderen Ausgestaltung wird auf ein Frostschutzfluid gänzlich verzichtet. Stattdessen wird der Enteisungswärmetauscher permanent vom normalen Arbeitsfluid, insbesondere von Wasser, durchströmt. Untersuchungen haben gezeigt, dass permanent im Fluss gehaltenes Wasser wesentlich später gefriert und so auch Temperaturen unter 0° Celsius, wohl bis -3° Celsius bzw. -4° Celsius noch handhabbar sind. Nach einem zusätzlichen Aspekt der vorliegenden Erfindung kann das den Enteisungswärmetauscher durch strömende Fluid bedarfsweise auch mit einem Wärmefluid dann vermischt werden, wenn in Folge eines Signals eines Vereisungssensors, der insbesondere den durch den Enteisungswärmetauscher geführten Volumenstrom des Arbeitsfluids erfasst, ein auf Vereisung (insbesondere eine reduzierte Durchflussmenge) hindeutendes Signal ausgibt.

Ein Vereisungssensor kann aber auch anstelle oder zusätzlich zum Volumenstrom den Differenzdruck überwachen. Wenn sich ein erhebliches Druckgefälle zwischen einem Punkt vor dem Enteisungswärmetauscher und einem Punkt nach dem Enteisungswärmetauscher ausbildet, wird dies als ein Hinweis auf eine einsetzende oder bereits fortgeschrittene Vereisung angesehen.

In einer konkret bevorzugten Ausgestaltung kann in vorrichtungstechnischer Hinsicht vorgesehen sein, dass zwischen Wärmequelle und Hauptwärmetauscher ein erster Entkopplungswärmetauscher und/oder zwischen Kältequelle und Hauptwärmetauscher ein zweiter Entkopplungswärmetauscher vorgesehen ist, um die Klimatisierungseinrichtung von einer Wärmequelle bzw. einer Kältequelle zu entkoppeln. Mit dieser Lösung wird es möglich, die Klimatisierungseinrichtung partiell oder völlig in fluidtechnischer Hinsicht zu entkoppeln. Jedoch wird es insbesondere auch möglich, die Klimatisierungseinrichtung, was an sich aber nur in Einzelfällen sinnvoll sein dürfte, komplett, das heißt ausschließlich mit Frostschutzfluid zu betreiben. Durch die Entkopplung ist sichergestellt, dass das Frostschutzfluid innerhalb der Klimatisierungseinrichtung verbleibt. Die vorgeschlagene Entkopplung kann aber auch aus anderen Überlegungen heraus zweckmäßig sein, etwa wenn es gewünscht ist, das von einer Wärmequelle bzw. Kältequelle zugeführte Fluid nicht in die Klimatisierungseinrichtung zu leiten.

In einer weiterhin bevorzugten Ausgestaltung kann die Klimatisierungseinrichtung in steuerungs- bzw. reglungstechnischer Hinsicht dahingehend verbessert sein, dass einige oder alle Stellorgane und/oder einige oder alle und/oder einige oder alle Förderorgane, wie Ventilatoren oder Pumpen, über ein Bussystem mit einer zentralen Steuer-und/oder Auswärtseinrichtung verbunden sind. Hierdurch lassen sich die angeschlossenen Stellorgane, Sensoren, Förderorgane einzeln ansteuern bzw. in ihrem Betrieb überwachen. Eine Umorganisation der vorgesehenen Steuer- bzw. Regelungsschemata ist dann auch in besonders einfacher Weise möglich. Über die Überwachungsmöglichkeiten lassen sich zahlreiche Auswertungen vornehmen. Fernwartungen bzw. Ferndiagnose werden möglich. Eine Anbindung an übergeordnete Leitsysteme ist ebenfalls möglich.

Nach einem weiteren bevorzugten Aspekt der vorliegenden Erfindung sind zur Beschickung des Hauptwärmetauschers mit Wärme- bzw. Kältefluid Einstellventile vorgesehen, die als kontinuierliche Ventile, insbesondere als kontinuierlich einstellbare Dreiwegeventile, eine Mischung von mit aus der Wärmequelle bzw. Kältequelle mit Wärme bzw. Kälte beaufschlagten Fluid mit aus dem Hauptwärmetauscher rückgeführten Fluid gestatten. Unter rückgeführten Fluid wird in diesem Kontext sowohl ein unmittelbar aus dem Hauptwärmetauscher rückgeführtes Fluid, aber auch ein rückgeführtes Fluid, dass unter anderem den Hauptwärmetauscher, aber auch andere Komponenten durchströmt hat, verstanden.

Nach einem weiteren bevorzugten Aspekt ist vorgesehen, dass über entsprechende Stellorgane die Durchströmungsrichtung des Hauptwärmetauschers bezogen auf eine Luftströmungsrichtung im Zuluftkanal einstellbar (umkehrbar) ist, wobei je nach gewünschtem Betriebszustand eine Durchströmung des Hauptwärmetauschers in Richtung der Luftströmungsrichtung in Zuluftkanal bzw. entgegen der Luftströmungsrichtung einstellbar ist. Es hat sich gezeigt, dass im Kühlmodus, in dem der Hauptwärmetauscher mit Kälte beaufschlagt wird, eine Durchströmung des Hauptwärmetauschers entgegen der Strömungsrichtung der Zuluft im Zuluftkanal zu bevorzugen ist. Eine Kühlung kann beispielsweise dadurch erfolgen, dass als Kältefluid 14 °C kaltes Kältefluid, insbesondere 14 °C kaltes Wasser, eingesetzt wird, um eine Taupunktunterschreitung zu verhindern. Ein ungewolltes Auskondensieren von Wasser aus der zu kühlenden Luft hat einen enormen Energieaufwand zur Folge, der dem eigentlichen Zweck, nämlich der Kühlung der Luft, verloren geht. Im Hinblick auf Energieeffizienz ist es ein Gedanke der vorliegenden Erfindung, die Kühlung mit Kältefluid vorzunehmen, das eine Temperatur T ≥ 14 °C aufweist. Es sei in diesem Zusammenhang bemerkt, dass zur Auskondensierung von 1 kg Wasser etwa 1 kW Kälte zusätzlich benötigt wird, so dass es im Hinblick auf die Energieeffizienz ein ungewolltes Auskondensieren zu vermeiden gilt.

Im weiteren Betriebsmodus, in dem der Hauptwärmetauscher mit Kälte beaufschlagt wird, nämlich dem Entfeuchtungsmodus, ist eine Beschickung des Hauptwärmetauschers mit Kältefluid mit und entgegen der Luftströmungsrichtung denkbar, bevorzugt wird eine Beschickung in Richtung der Luftströmungsrichtung. Der Entfeuchtungsmodus kann beispielsweise dadurch betrieben werden, dass ein Kältefluid mit einer Temperatur ≤ 6 °C, insbesondere Wasser mit einer Temperatur ≤ 6 °C, durch den Hauptwärmetauscher geführt wird.

In den Betriebszuständen, in dem Hauptwärmetauscher hingegen Wärme zugeführt wird, etwa im Aufheizmodus oder im Befeuchtungsmodus, ist eine Durchströmung des Hauptwärmetauschers in Richtung der Luftrichtung im Zuluftkanal sinnvoll. Dies gilt insbesondere für den Befeuchtungsmodus. Die Verdunstung der auf den Hauptwärmetauscher auftreffenden Aerosolpartikel benötigt sehr viel Energie, die somit an der bezogen auf die Strömungsrichtung der Zuluft Eingangsseite des Hauptwärmetauschers bereitgestellt werden muss. Durch diese Anordnung ist es aber insbesondere möglich, Wärme in Form von Warmwasser in Richtung der Luftrichtung durch den Hauptwärmetauscher zu führen, das lediglich 35 °C im Vorlauf aufweist. Insofern kann hier auch aus anderen industriellen Prozessen u.U. vorhandene Abwärme genutzt werden.

In einer bevorzugten Ausgestaltung wird eine "Überbefeuchtung" dergestalt vorgenommen, dass von den Düsenstöcken die durch den Hauptwärmetauscher strömende Luft nicht nur befeuchtet, sondern "überbefeuchtet" wird. Unter Überbefeuchtung wird hier verstanden, dass die Luft vor Eintritt in den Wärmetauscher zu nahezu 100 % mit Feuchtigkeit gesättigt ist, gleichzeitig aber noch unverdunstete Aerosolpartikel beinhaltet. Konkret verdunsten nicht alle im Luftstrom aufgenommene Aerosolpartikel vor bzw. beim Eintritt in den Hauptwärmetauscher, sondern werden während des Durchtritts durch den Wärmetauscher "nachverdunstet". Durch diese Maßnahme ist es möglich, wesentlich mehr Feuchtigkeit in den zu befeuchtenden Luftstrom einzubringen, ohne dass in nennenswertem Umfang Wasser aus dem Hauptwärmetauscher abläuft, was ansonsten Hygieneprobleme mit sich brächte. Die Eindüsung von Wasser erfolgt mit einer Regelung, insbesondere einer Taupunktregelung. Der Druck, mit dem die Düsen des Düsenstocks beaufschlagt werden, mithin der Druck, mit dem das Wasser zu Befeuchtungszwecken ausgebracht wird, ist stufenlos, insbesondere mittels eines Frequenzumrichters in einem weiten Bereich einstellbar, insbesondere über einen Bereich von 0 bis 120 bar.

Bevorzugtermaßen wird zur Befeuchtung vollentsalztes Wasser eingesetzt. Hierzu kann beispielsweise eine Umkehrosmoseanlage vorgeschaltet sein, die vorteilhafterweise ohne Zwischenlagerung des Wassers in einem Pufferbehältnis, der Befeuchtungsanlage entsalztes Wasser dem aktuellen Bedarf entsprechend zuführt. Durch diese Maßnahme wird gleichzeitig die Oberflächenspannung der durch die Düsenstöcke erzeugten Aerosolpartikel reduziert, was wiederum deren Verdunstung begünstigt.

In einer konkret bevorzugten Ausgestaltung umfasst die Wärmerückgewinnungseinrichtung einen Abluftkanal mit einem ersten einlassseitigen Ende, einem zweiten auslassseitigen Ende und einem dazwischen im Abluftkanal angeordneten, von einem im Abluftkanal geführten Abluftstrom durchströmten Wärmerückgewinnungswärmetauscher, wobei die Wärmerückgewinnungseinrichtung ausgebildet ist, aus dem Abluftstrom Wärme über den Wärmerückgewinnungs-Wärmetauscher abzuführen und dem Luftstrom im Zuluftkanal zur Verfügung zu stellen. Mit dieser Ausgestaltung ist die Wärmerückgewinnungseinrichtung nicht nur zur Gewinnung von Wärme im eigentlichen Sinne sondern auch zur Gewinnung von Kälte im Sommerbetrieb ausgebildet. Insofern wird für den Kontext der vorliegenden Anmeldung klargestellt, das wenn von der Wärmerückgewinnungseinrichtung bereitgestellter Wärme die Rede ist, dies fallweise auch von der Wärmerückgewinnungseinrichtung bereitgestellte Kälte umfasst. Insbesondere in den Sommermonaten, in denen der Hauptwärmetauscher möglicherweise auch dem Betriebsmodi kühlen bzw. Entfeuchten betrieben werden soll, ist es zweckmäßig, wenn auch die Wärmerückgewinnungseinrichtung Kälte bereitstellen kann. Wird eine Wärmerückgewinnung dieser Art eingesetzt, kann die Kältemaschine zur Bereitstellung der Kälte u.U. um bis zu 50 % kleiner ausgelegt werden, so dass hier baulich und energetisch eine erhebliche Einsparung erzielbar ist.

In einer bevorzugten Ausgestaltung ist der im Zuluftkanal und/oder einem Abluftkanal der Wärmerückgewinnungseinrichtung angeordnete Düsenstock jeweils einzeln oder gemeinsam durch eine Hochdruckpumpe mit Befeuchtungsfluid beaufschlagbar, wobei die Hochdruckpumpe zur Beaufschlagung des Befeuchtungsfluid mit 60 bar und mehr ausgebildet ist, um über die Düsenstöcke feinstvernebelte Tröpfchen als Aerosole auszubilden. Aerosole weisen eine im Vergleich zu ihrem Volumen sehr hohe Oberfläche auf, so dass eine hocheffiziente Verdunstung erzielbar ist.

Um je nach Betriebszustand den Wärmerückgewinnungs-Wärmetauscher und/oder den Fluid-Fluidwärmetauscher und/oder den Vorwärmetauscher umgehen zu können, ist jeweils eine Bypassleitung mit entsprechendem Bypassventil am Wärmerückgewinnungs-Wärmetauscher bzw. eine Rückführ Bypassleitung mit einem entsprechendem Rückführ Bypassventil am Fluid-Fluidwärmetauscher bzw. eine Bypassleitung mit entsprechendem Bypassventil am Vorwärmetauscher vorgesehen.

In einer weiteren fakultativen Ausgestaltung der vorliegenden Erfindung, auf die bereits kurz eingegangen wurde, ist der Enteisungswärmetauscher dazu ausgebildet und eingerichtet, insbesondere ab einer Außentemperatur unterhalb einer festgelegten Grenztemperatur kontinuierlich durchströmt zu werden. In einer Weiterbildung dieser fakultativen Ausgestaltungsmöglichkeit kann vorgesehen werden, dass ein Vereisungssensor zur Erfassung des Volumenstroms des durch den Enteisungswärmetauscher strömenden Fluids vorgesehen ist und das bei Abfall des gemessenen Wertes, insbesondere über eine durch Ventile gesteuerte Beimengung eines Wärmefluids eine Erwärmung des über den Enteisungswärmetauscher geführten Fluids erfolgt. Der Enteisungswärmetauscher hat insbesondere die Funktion, die einströmende Luft geringfügig vorzuerwärmen, um Nebelbildung und damit die Vereisung von Filtereinrichtungen, durch die der Luftstrom geführt wird, zu verhindern.

Nach einem weiteren bevorzugten Aspekt der vorliegenden Erfindung ist die Klimatisierungseinrichtung dazu ausgebildet und bestimmt, entweder komplett ohne spezielles Frostschutzfluid betrieben oder bis auf einen zwischen Enteisungswärmetauscher und Fluid-Fluidwärmetauscher vorgesehenen Kreislauf ohne spezielles Frostschutzfluid betrieben und/oder komplett mit Frostschutzfluid unter Abtrennung des Frostschutzfluidkreises durch Entkopplungswärmetauscher von einer externen Wärmequelle und/oder einer externen Kältequelle betrieben zu werden. Ein Betrieb komplett ohne spezielles Frostschutzfluid wird, wenn anderweitige Vorkehrungen gegen Vereisen getroffen sind, als besonders bevorzugt angesehen. Insbesondere bei Verwendung von Wasser steht ein kostengünstig erhältliches Fluid zur Verfügung, das eine hohe Wärmeleitfähigkeit und eine hohe Wärmekapazität aufweist, so das es sich ideal als Wärme bzw. Kältefluid im Sinne der vorliegenden Erfindung eignet. Bei den meisten gängigen Frostschutzfluiden sind hingegen Einschränkungen hinzunehmen, was Wärmeleitfähigkeit und/oder Wärmekapazität betrifft. Darüber hinaus sind Frostschutzfluide meist umweltbelastend und sowohl hinsichtlich der Anschaffung als auch der Wartung teuer.

Insbesondere hinsichtlich der Wartung ist darauf hinzuweisen, dass mit Frostschutzfluiden betriebene Klimatisierungseinrichtungen bei Reparaturen am hydraulischen System zunächst die Bereitstellung einer Auffangwanne erfordern. Darüber hinaus muss das Frostschutzfluid vor Beginn der Reparaturarbeiten abgepumpt werden. Es sind insofern auch Auffangbehältnisse, etc. erforderlich. Insgesamt ist bei der Verwendung von Frostschutzfluiden ein erheblicher Mehraufwand gegeben. Durch die schlechtere Wärmeleitfähigkeit und/oder Wärmekapazität ist auch die Energieeffizienz der Klimatisierungseinrichtung im Betrieb in erheblicher Weise verschlechtert.

Es ist aber auch möglich, den Einsatz von Frostschutzfluid auf ein Mindestmaß zu beschränken, dann nämlich, wenn Enteisungswärmetauscher und der Rest der Klimatisierungseinrichtung fluidtechnisch über einen Fluid-Fluidwärmetauscher entkoppelt sind.

Schließlich ist es, falls gewünscht oder notwendig, auch möglich, die Klimatisierungseinrichtung komplett mit Frostschutzfluid unter Abtrennung des Frostschutzfluidkreises durch Entkopplungswärmetauscher von einer externen Wärmequelle und/oder einer externen Kältequelle zu betreiben.

In einer weiterhin bevorzugten Ausgestaltung kann in vorrichtungstechnischer Hinsicht vorgesehen sein, dass bei Vorsehen eines fluidtechnischen entkoppelten Enteisungswärmetauschers der Hauptwärmetauscher und der Fluid-Fluidwärmetauscher über eine Wärmezufuhrleitung miteinander in Fluidverbindung stehen, um ein durch den Hauptwärmetauscher geführtes Wärmefluid anschließend über den Fluid-Fluidwärmetauscher zu führen und so dem Frostschutzwärmefluid Wärmeenergie zuzuführen.

Bevorzugtermaßen kann bei Vorsehen eines fluidtechnisch entkoppelten Enteisungswärmetauschers und bei Vorsehen einer Wärmerückgewinnungseinrichtung mit einem Wärmerückgewinnungs-Wärmetauscher eine Wärmerückgewinnungs-Zufuhrleitung zwischen Fluid-Fluidwärmetauscher und Wärmerückgewinnungs-Wärmetauscher vorgesehen sein, um im Fluid-Fluidwärmetauscher abgekühltes Wärmefluid zum Zwecke der Erwärmung durch den Abluftstrom dem Wärmerückgewinnungs-Wärmetauscher zuzuführen.

In einer möglichen Ausgestaltung ist der Fluid-Fluidwärmetauscher als Plattenwärmetauscher ausgebildet.

Ein Aspekt des erfindungsgemäßen Verfahren zum Konditionieren eines in einem Zuluftkanal geführten Luftstroms zur Klimatisierung eines Raums, wobei einlassseitig am Zuluftkanal der Zuluftstrom über einen Enteisungswärmetauscher auf eine Temperatur ≥ 0 °C erwärmt wird, sieht vor, dass der Enteisungswärmetauscher mit einem Frostschutzwärmefluid beschickt wird, das über ein vom Frostschutzfluid getrennt geführtes Wärmefluid erwärmt wird.

Alternativ ist es aber auch möglich, wie bereits erwähnt, das anstelle eines seperaten Frostschutzfluids ein "normales Wärmefluid", wie beispielsweise Wasser über den Enteisungswärmetauscher geführt wird, wobei durch Aufrechterhaltung eines ausreichendes Volumenstromes ggf. unter Erwärmung des über den Enteisungswärmetauscher geführten Wärmefluids und ggf. die Überwachung durch einen Vereisungssensors sichergestellt wird, das eine zu Beschädigung führende Vereisung nicht eintritt.

Durch diese Vorgehensweise wird es möglich, die Menge an eingesetztem Frostschutzfluid zu begrenzen, oder alternativ den Einsatz von Frostschutzfluid ganz zu vermeiden In der ersten Alternative kann vorgesehen sein, dass lediglich ein Frostschutzfluidkreislauf, der über den Enteisungswärmetauscher geführt ist, vorgesehen ist. Dem Frostschutzwärmekreislauf wird dann Wärmeenergie über das getrennt geführte Wärmefluid zugeführt.

In einer bevorzugten Ausgestaltung des erfindungsgemäßen Verfahrens handelt es sich bei dem zur Erwärmung des Frostschutzwärmefluids genutzten Wärmefluid um ein aus einem im Zuluftkanal betriebenen Hauptwärmetauscher rückgeführtes Wärmefluid.

In einer weiterhin möglichen Ausgestaltung wird zur Erwärmung des Wärmefluids aus einer Wärmerückgewinnungseinrichtung gewonnene Wärme genutzt bzw. das durch Wärmeübertragung an das Frostschutzfluid abgekühlte Wärmefluid wird in einer Wärmerückgewinnungseinrichtung (wieder) erwärmt.

Die Erfindung wird nachstehend auch hinsichtlich weiterer Merkmale und Vorteile anhand der Beschreibung zweier Ausführungsbeispiele näher erläutert.

Hierbei zeigen:
- Figur 1: eine Ausführungsform einer Klimatisierungseinrichtung nach einem Aspekt der vorliegenden Erfindung in einer schematischen Prinzipdarstellung.
- Figur 2: eine Ausführungsform einer Klimatisierungseinrichtung nach einem anderen Aspekt der vorliegenden Erfindung in einer schematischen Prinzipdarstellung.

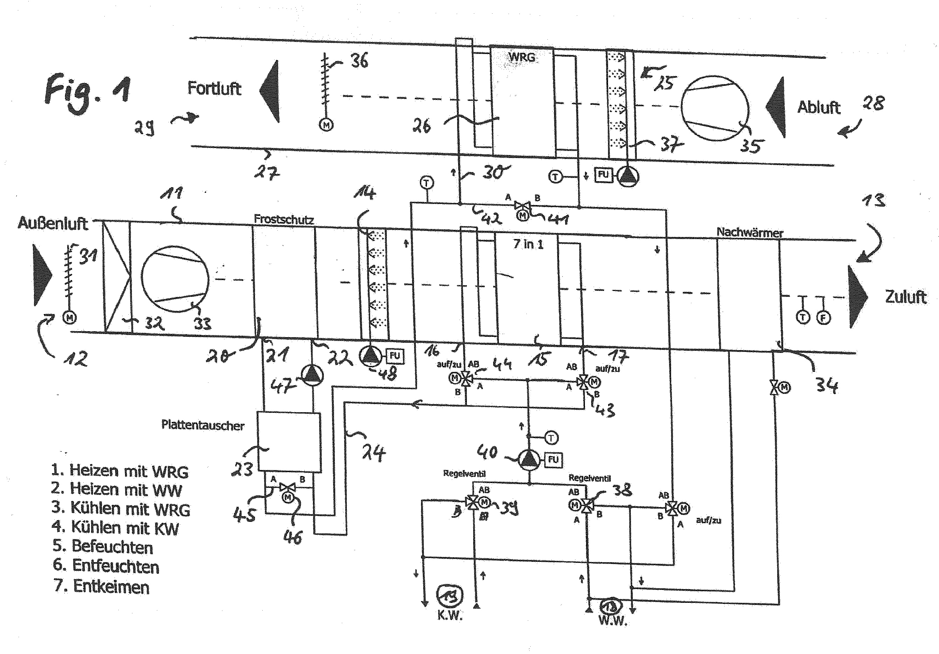

Die in Figur 1 dargestellte exemplarische Ausführungsform einer Klimatisierungseinrichtung nach einem Aspekt der vorliegenden Erfindung weist einen Zuluftkanal 11 sowie einen Abluftkanal 27 auf. Es wird bereits an dieser Stelle darauf hingewiesen, dass der Abluftkanal 27 insbesondere bei diesem Aspekt der Erfindung optional ist und eine Klimatisierungseinrichtung nicht zwangsläufig einen anhand der vorstehenden Ausführungsform beschriebenen Abluftkanal 27 aufweisen muss.

Im Zuluftkanal 11 wird Außenluft in einen zu klimatisierenden Raum eingeleitet, wobei die Außenluft im Zuluftkanal konditioniert wird. An einem einlassseitigen Ende 12 des Zuluftkanals ist zunächst eine über einen Motor betätigbare Verschlussklappe 31 vorgesehen. Stromabwärts der Verschlussklappe ist ein Filter 32 vorgesehen, um die Außenluft zu reinigen. Dem Filter 32 nachgeordnete ein oder mehreren Ventilatoren 33 sind bevorzugtermaßen steuer- bzw. regelbar ausgebildet derart, dass sich die Luftgeschwindigkeit im Zuluftkanal 11 stufenlos einstellen lässt. Abstromseitig des oder der Ventilatoren 33 ist ein Enteisungswärmetauscher 20 vorgesehen. Mittels des Enteisungswärmetauschers kann der Luftstrom in den kälteren Monaten auf eine gewünschte Mindesttemperatur von z.B. 5 °C erwärmt werden.

Dem Enteisungswärmetauscher 20 in Strömungsrichtung nachgeordnet ist ein Düsenstock 14 vorgesehen zur bedarfsweisen Befeuchtung des Luftstroms mit einem Befeuchtungsfluid. Bevorzugtermaßen wird das Befeuchtungsfluid in Form eines Aerosolnebels eingebracht. Der Aerosolnebel wird wie bereits erwähnt dadurch erzeugt, dass Wasser mit hohem Druck durch Düsen mit Kleinstquerschnitten ausgebracht wird, wie an sich bekannt. Der Druck des Befeuchtungsfluids lässt sich mittels einer stufenlos steuerbaren Hochdruckpumpe 71 einstellen. Strömungsabwärts des Düsenstocks 14 ist ein Hauptwärmetauscher 15 vorgesehen, der in unterschiedlichen Betriebsarten - hierzu später - betrieben werden kann. Zwischen dem Hauptwärmetauscher 15 und einem auslassseitigen Ende 13 des Zuluftkanals 11 kann noch ein Nachwärmer 34 angeordnet sein, um - beispielsweise im Entfeuchtungsbetrieb - abgekühlte Zuluft vor Einleitung in den Raum nachzuerwärmen.

Bei der anhand von Figur 1 beschriebenen Klimatisierungseinrichtung ist schließlich noch eine in einem Abluftkanal ausgebildete Wärmerückgewinnungseinrichtung 25 vorgesehen. Über die Wärmerückgewinnungseinrichtung 25 lässt sich die in der aus dem Raum ausgeleiteten Abluft vorhandene Wärme im Winter zur Erwärmung der Zuluft und im Sommer zur Erzeugung von Verdunstungskälte nutzen. Konkret sind hierzu im Abluftkanal in der Nähe eines einlassseitigen Endes 28 ein oder mehrere Ventilatoren 35 angeordnet. Der oder die Ventilatoren 35 sind bevorzugtermaßen so ausgelegt, dass die Geschwindigkeit des Luftstroms im Abluftkanal 27 einstellbar ist. In Nähe eines auslassseitigen Endes 29 ist eine Verschlussklappe 36 vorgesehen, um den Abluftkanal bedarfsweise verschließen zu können. Die Verschlusskappe 36 kann bevorzugtermaßen motorgetrieben geöffnet bzw. verschlossen werden.

Innerhalb des Abluftkanals 27 ist ein Wärmerückgewinnungs-Wärmetauscher 26 angeordnet, über den im "Winterbetrieb" noch in der Abluft vorhandene Wärme in ein Wärmefluid übertragen und über das Wärmefluid in den Hauptwärmetauscher 15 im Zuluftkanal 11 eingespeist werden kann zur Erwärmung der Zuluft. Im "Sommerbetrieb" kann über einen zwischen Ventilatoren 35 und Wärmerückgewinnungs-Wärmetauscher 26 vorgesehenen Düsenstock 37 durch Eindüsung von Aerosolpartikeln in den Abluftstrom Verdunstungskälte erzeugt werden. Die Verdunstungskälte kann über den Wärmerückgewinnungs-Wärmetauscher 26 an ein Wärmefluid übertragen und dann beispielsweise in den Hauptwärmetauscher 15 im Zuluftkanal 11 eingespeist werden zur Abkühlung der Zuluft.

Es ist nach dem hier beschriebenen Aspekt der Erfindung weiterhin noch ein Fluid-Fluidwärmetauscher 23 vorgesehen, der hier außerhalb des Zuluftkanals 11 bzw. des Abluftkanals 27 angeordnet ist. Über den Fluid-Fluidwärmetauscher 23 kann ein gleichzeitig über den Enteisungswärmetauscher 20 geführtes Frostschutzfluid durch ein getrennt geführtes Wärmefluid erwärmt werden. Das Frostschutzfluid kann beispielsweise Glykol sein. Das getrennt geführte Wärmefluid zur Erwärmung des Frostschutzfluids kann beispielsweise Wasser sein. Über eine Umwälzpumpe 47 wird das Frostschutzfluid zwischen Frostschutz-Wärmetauscher 20 und Fluid-Fluidwärmetauscher 23 umgewälzt. Konkret kann die Umwälzpumpe zwischen Fluid-Fluidwärmetauscher 23 und Enteisungswärmetauscher 20 angeordnet sein und das Frostschutzfluid zunächst über einen zweiten Anschluss 22 in den Enteisungswärmetauscher 20 fördern. Über einen ersten Anschluss 21 tritt das Frostschutzfluid aus dem Enteisungswärmetauscher 20 wieder aus und wird von dort an den Fluid-Fluidwärmetauscher 23 weitertransportiert. Das Frostschutzfluid kann insofern den Enteisungswärmetauscher 20 im Gegenstromprinzip (bezogen auf die Strömungsrichtung des Zuluftstroms) durchströmen. Es kann aber auch eine anderweitige Beschickung vorgesehen sein.

Über eine Wärmezufuhrleitung 24 kann Wärmefluid, das zuvor den Hauptwärmetauscher 15 durchströmt hat, noch über den Fluid-Fluidwärmetauscher 23 geführt werden, um dem Enteisungswärmetauscher zur Erwärmung der Zuluft Wärme zuzuführen. Zum Betrieb der erfindungsgemäßen Klimatisierungseinrichtung ist diese zweckmäßigerweise sowohl an eine Wärmequelle 18 als auch an eine Kältequelle 19 angeschlossen. Die Wärmequelle 18 kann beispielsweise 80 °C heißes Wasser bereitstellen. Die Kältequelle beispielsweise 4 °C kaltes Wasser.

Mittels einer mit Frequenzumrichter versehenen Förderpumpe 40 lässt sich Wärmefluid über den Hauptwärmetauscher 15 dem Fluid-Fluidwärmetauscher 23 und bedarfsweise dem Wärmerückgewinnungs-Wärmetauscher 26 umwälzen. Ebenfalls bedarfsweise lässt sich über ein Wärmezufuhrregelventil 38 bzw. ein Kältezufuhrregelventil 39 zusätzliches Wärmefluid aus der Wärmequelle 18 bzw. (in Form von Kälte) aus der Kältequelle 19 zuführen. Für den Fall, dass die Wärmerückgewinnungseinrichtung 25 nicht benötigt wird, lässt sich über ein Bypassventil 41, das motorbetrieben geöffnet bzw. geschlossen werden kann, eine Bypassleitung 42 öffnen bzw. schließen. Wird die Bypassleitung 42 geöffnet, strömt das Wärmefluid wegen des geringeren Strömungswiderstands zum überwiegenden Teil durch die Bypassleitung 42 und umgeht damit den Wärmerückgewinnungs-Wärmetauscher 26. Durch motorbetriebene Einstellventile 43, 44 lässt sich der Hauptwärmetauscher 15 wahlweise parallel zur Strömungsrichtung der Zuluft bzw. entgegen zur Strömungsrichtung der Zuluft mit Wärmefluid beschicken. Insofern kann ein erster Anschluss 16 am Hauptwärmetauscher wahlweise Eintritt bzw. Auslass für das Wärmefluid sein. Ein weiterer Anschluss 17 am Hauptwärmetauscher ist dementsprechend wahlweise Auslass bzw. Eintritt. Unter "Wärmefluid" soll im Kontext der vorliegenden Anmeldung ein Kälte oder Wärme übertragendes Fluid verstanden werden unabhängig von der Temperatur. Insofern wird auch ein unmittelbar aus der Kältequelle 19 bezogenes Fluid, das beispielsweise eine Temperatur von 4 °C aufweisen mag, als Wärmefluid bezeichnet. Selbstverständlich wird als Wärmefluid aber auch ein Fluid bezeichnet, das im eigentlichen Sinne beispielsweise zur Erwärmung der Zuluft eingesetzt wird und beispielsweise, wenn es aus der Wärmequelle 18 stammt, eine Temperatur von 80 °C aufweisen kann. Das durch den Hauptwärmetauscher 15 geführte Wärmefluid wird anschließend - wie bereits erwähnt, durch den Fluid-Fluidwärmetauscher 23 geführt oder über eine Rückführ-Bypassleitung, die über ein Rückführbypassventil 46 öffenbar bzw. verschließbar ist, am Fluid-Fluidwärmetauscher 23 vorbeigeführt. Durch den bereits erwähnten Wärmerückgewinnungs-Wärmetauscher 26 kann dem rückgeführten Wärmefluid wieder Wärmeenergie zugeführt werden (im Winterbetrieb) bzw. das rückgeführte Wärmefluid weiter abgekühlt werden (im Sommerbetrieb).

Zur Beschickung des Hauptwärmetauschers 15 mit Wärmefluid aus der Wärmequelle 18 bzw. der Kältequelle 19 kann dieses Wärmefluid, wie bereits erwähnt, mit Wärmefluid vermischt werden, das bereits durch den Hauptwärmetauscher 15 geflossen ist. Dies kann beispielsweise dazu eingesetzt werden, die Fluidtemperatur bei Eintritt in den Hauptwärmetauscher auf eine jeweils gewünschte Eintrittstemperatur exakt einzustellen bzw. einzuregeln. Alternativ ist es auch möglich, eine jeweils gewünschte Austrittstemperatur aus dem Hauptwärmetauscher 15 exakt einzustellen bzw. einzuregeln, und zwar dadurch, dass das jeweils erforderliche Mischungsverhältnis zwischen dem aus der Wärme- oder Kältequelle stammenden Wärmefluid (Frischfluid) und dem bereits durch den Hauptwärmetauscher 15 geführten Fluid (Rückflussfluid) eingestellt wird.

So kann beispielsweise, wenn mit dem Hauptwärmetauscher eine bloße Kühlung des durchgeführten Zuluftstroms bezweckt wird, die Eintrittstemperatur exakt auf einen Wert von 14 °C eingestellt werden; soll hingegen der Hauptwärmetauscher 15 im Entfeuchtungsbetrieb zur Entfeuchtung des zugeführten Zuluftstroms betrieben werden, so könnte eine Eintrittstemperatur von exakt 6 °C zweckmäßig sein.

Durch das Konzept der Mischung mit bereits durch den Hauptwärmetauscher 15 geführten Fluids (Rückflussfluid) ist es auch möglich, Schwankungen des Temperaturniveaus der Wärmequelle 18 bzw. der Kältequelle 19 (Frischfluid) auszugleichen. Nach einem Aspekt der vorliegenden Erfindung wird das Rückflussfluid bedarfsweise noch über den Fluid-Fluidwärmetauscher 23 geführt, um dort ein getrennt geführtes Frostschutzfluid, das dem Enteisungswärmetauscher 20 Wärme zuführt, zu erwärmen.

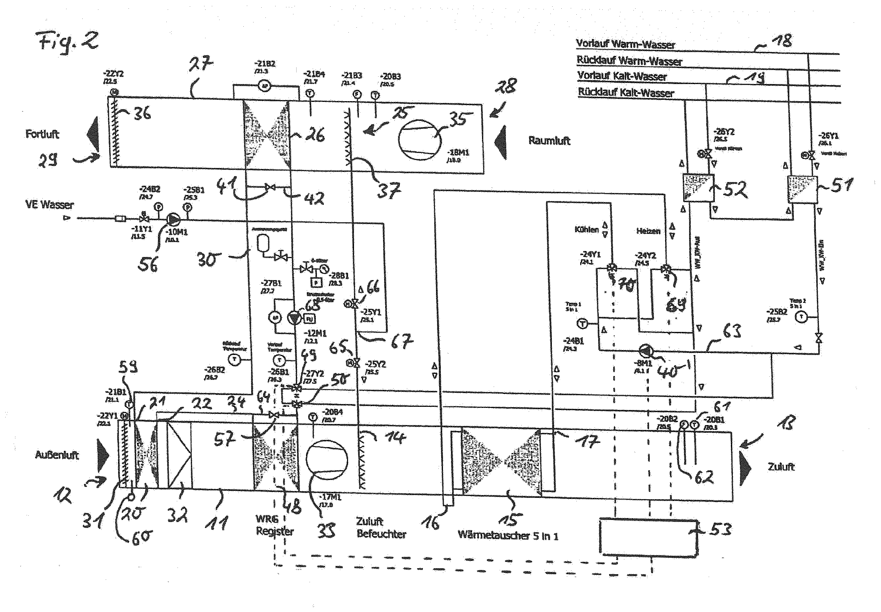

In Figur 2 ist eine gegenüber der Ausführungsform nach Figur 1 nochmals abgewandelte Ausführungsform dargestellt. Bei dieser Ausführungsform lässt sich die Wärmerückgewinnungseinrichtung 25 noch flexibler nutzen. Der Aufbau der Wärmerückgewinnungseinrichtung als solches, nämlich die Anordnung eines Wärmerückgewinnungs-Wärmetauschers 26 in einem Abluftkanal 27, wobei bedarfsweise Aerosolepartikel über einen Düsenstock ausgebracht werden können, entspricht dem Aufbau nach Figur 1.

Im Zuluftkanal 11 ist bei der hier beschriebenen exemplarischen Ausführungsform der Enteisungswärmetauscher 20 vor dem Filter 32 angeordnet. Darüber hinaus gibt es einen weiteren Wärmetauscher, nämlich einen Vorwärmetauscher 48, der zwischen dem Filter 32 und einem Ventilator 33 angeordnet ist. Von einem einlassseitigen Ende 12 Zuluftskanal 11 her betrachtet sind zwischen einlassseitigen Ende 12 und auslassseitigem Ende 13 die folgenden Komponenten angeordnet: Ein Enteisungswärmetauscher 20, ein Filter 32, ein Vorwärmetauscher 48, ein oder mehrere Ventilatoren 33, ein Düsenstock 14 zum bedarfsweisen Ausbringen eines Aerosolnebels, ein Hauptwärmetauscher 15 mit 5 bzw. 7 Betriebsmodi. Weiterhin sind am einlassseitigen Ende 12 des Zuluftkanals 11 noch ein Temperaturfühler 59, ein Feuchtefühler 60 und am auslassseitigen Ende 13 ebenfalls noch ein Temperaturfühler 61 sowie ein Feuchtefühler 62 vorgesehen. Über den Temperaturfühler 59 und den Feuchtefühler 60 wird der Zustand der zugeführten Außenluft erfasst. Über den Temperaturfühler 61 sowie den Feuchtefühler 62 wird der Zustand der im Zuluftkanal 11 konditionierten Luft erfasst. Der Hauptwärmetauscher 15 kann in mehreren, bevorzugtermaßen 7 Betriebsmodi betrieben werden, wie dies nachfolgend noch erläutert werden wird. Wie auch schon anhand des Ausführungsbeispiels nach Figur 1 beschrieben lässt sich dem Hauptwärmetauscher 15 Wärmeenergie aus einer Wärmequelle 18 bzw. Kälteenergie aus einer Kältequelle 19 zuführen.

Bei der in Figur 2 dargestellten Ausführungsform ist ein erster Entkopplungswärmetauscher 51 vorgesehen, der aus einer Wärmequelle 18 stammende Wärmeenergie auf einen Zulauf 63 übertragen kann. Das hydraulische System der Klimatisierungseinrichtung ist somit fluidtechnisch von der Wärmequelle 18 getrennt.

In gleicher Weiße kann eine Trennung auch zur Kältequelle 19 über einen zweiten Entkopplungswärmetauscher 52 realisiert sein. Bedarfsweise lässt sich so von der Kältequelle 19 zur Verfügung gestellte Kälte fluid-technisch getrennt auf den Zulauf 63 übertragen. Mittels einer Förderpumpe 40 wird das mit Wärme aus der Wärmequelle 18 bzw. Kälte aus der Kältequelle 19 beladene Wärmefluid an den Hauptwärmetauscher 15 gefördert. Dabei lässt sich über ein Wärmezufuhrregelventil 38 bzw. ein Kältezufuhrregelventil 39 sowohl die Temperatur als auch die Beschickungsrichtung einstellen, wie dies bereits anhand der Ausführungsform nach Figur 1 beschrieben wurde.

Während bei der Ausführungsform nach Figur 1 die Wärmeenergie der Wärmerückgewinnungseinrichtung 25 zumindest auch dem Hauptwärmetauscher 15 zugeführt wurde, ist bei der Ausführungsform nach Figur 2 eine größere Flexibilität gegeben. Über Umschaltorgane 49,50 lässt sich das vom Wärmerückgewinnungswärmetauscher 26 kommende, über eine Umwälzpumpe 68 geförderte Wärmefluid (ggf. auch Kältefluid) an den Zulauf 63 leiten, sodass das Wärmefluid bzw. das Kältefluid wenigstens zunächst über den Hauptwärmetauscher 15 geführt wird und ggf., sofern gewünscht, anschließend, wie anhand von Figur 1 erläutert über einen (oder mehrere) vorgelagerte Wärmetauscher, nämlich dem Enteisungswärmetauscher 20 und falls gewünscht auch über den Vorwärmetauscher 48. Sofern eine Beschickung des Vorwärmetauschers 48 nicht gewünscht ist, lässt sich über eine Bypassleitung 64 mit entsprechenden Bypassventil 57 das Wärmefluid am Vorwärmetauscher 48 vorbei führen. Es ist aber über die Umschaltorgane 49, 50 auch möglich, die von der Wärmerückgewinnungseinrichtung 25 bereitgestellte Wärme komplett über den Enteisungswärmetauscher 20 und ggf. auch den Vorwärmetauscher 48 zu führen.

Ein weiterer Unterschied zur Ausführungsform nach Figur 1 besteht darin, dass die Beschickungsrichtung des Hauptwärmetauschers 15 und die Beimischung von aus der Wärmequelle 18 stammenden Wärme- bzw. aus der Kältequelle 19 stammenden Kälte über ein erstes Einstellventil 69 und ein zweites Einstellventil 70 einstellbar bzw. steuerbar bzw. regelbar ist.

Nach einem bevorzugten Aspekt, der auch im Zusammenhang mit der Ausführungsform nach Figur 1 Anwendung finden kann, dort aber nicht explizit dargestellt ist, ist eine zentrale Steuer- und/oder Auswerteinrichtung 53 vorgesehen, die mit einigen oder allen Stellorganen und/oder einigen oder allen Sensoren und/oder einigen oder allen Förderorganen in Datenaustausch steht. Die zentrale Steuer- und/oder Auswerteinrichtung 53 ist dabei dazu ausgebildet, Stellsignale an einige oder alle Förderorgane und/oder Stellsignale an einige oder alle Stellorgane, wie Ventile zu geben. Die Steuerung bzw. Regelung geschieht dabei (auch) in Abhängigkeit der von den Sensoren gelieferten Signale. Bevorzugtermaßen erfolgt die Kommunikation über ein Bussystem. Der Aufwand für Verkabelung wird hierdurch wesentlich geringer. Die Adressierung einzelner Sensoren, Stellorgane oder Förderorgane wird wesentlich leichter. In Figur 2 ist die Wirkverbindung nur einiger Stellorgane und Förderorgane mit der zentralen Steuer- und/oder Auswerteinrichtung 53 angedeutet. Bevorzugtermaßen sind aber alle Stellorgane, Sensoren und Förderorgane mit der zentralen Steuer- und/oder Auswerteinrichtung 53 in Datenaustausch.

Ein zusätzlicher Unterschied zur Ausführungsform nach Figur 1 besteht noch darin, dass sowohl der Düsenstock 14 im Zulaufkanal 11 als auch der Düsenstock 37 im Abluftkanal 27 über eine gemeinsame Hochdruckpumpe 56 mit Befeuchtungsfluid versorgt werden. Um die auszubringende Befeuchtungsmenge einstellen zu können, ist dem ersten Düsenstock 14 dabei nach einem Verzweigungspunkt 67 ein erstes Befeuchtungs-Regelventil 65 und dem Düsenstock 37, ebenfalls nach dem Verzweigungspunkt 67, ein zweites Befeuchtungsregelventil 66 vorgeschaltet.

Der in beiden vorliegenden Ausführungsbeispielen eingesetzte Hauptwärmetauscher 15 kann in mindestens sieben unterschiedlichen Betriebsarten verwendet werden, und zwar
1. Heizen mit WRG,
2. Heizen mit WW,
3. Kühlen mit WRG,
4. Kühlen mit KW,
5. Befeuchten,
6. Entfeuchten,
7. Abtrocknen.

Im ersten Betriebszustand (Heizen mit WRG) wird Wärme aus der Abluft über den Wärmerückgewinnungs-Wärmetauscher gewonnen und an den Hauptwärmetauscher 15 evtl. zusätzlich oder alternativ auch an einen Enteisungswärmetauscher und/oder einen Vorwärmetauscher übertragen.

Im zweiten Betriebszustand (Heizen mit WW) wird unter Zumischung von Wärme entweder unmittelbar als Frischfluid aus der Wärmequelle 18 oder unter Zwischenschaltung eines Entkopplungswärmetauschers 51 ein Wärmefluid erwärmt und damit eine Erwärmung des Zuluftstroms bewirkt.

Im dritten Betriebszustand (Kühlen mit WRG) wird unter Ausnutzung der aus der Abluft gewonnenen Verdunstungskälte über den Wärmerückgewinnungs-Wärmetauscher 26 abgekühltes Wärmefluid an den Hauptwärmetauscher 15 übertragen und der Zuluftstrom dadurch gekühlt.

Im vierten Betriebszustand (Kühlen mit KW) wird unter Zumischung von Kälte entweder als Frischfluid aus der Kältequelle 19 oder unter Zwischenschaltung eines Entkopplungswärmetauschers 52 dem Hauptwärmetauscher 15 abgekühltes Wärmefluid zugeführt und so der Zuluftstrom gekühlt.

Im fünften Betriebszustand (Befeuchten) werden die über den Düsenstock 14 ausgebrachten Aerosolpartikel in den Hauptwärmetauscher 15 eingetragen und dort unter Einwirkung der vom Wärmefluid abgegebenen Wärme verdunstet.

Im sechsten Betriebszustand (Entfeuchten) wird der Luftstrom über den Hauptwärmetauscher 15 durch Zuführung von entsprechend abgekühltem Wärmefluid so weit heruntergekühlt, dass überschüssige Flüssigkeit auskondensiert. Der Zuluftstrom kann anschließend über den bereits erwärmten Nachwärmer 34 wieder auf ein gewünschtes Temperaturniveau erwärmt werden.

Die siebte Betriebszustand (Abtrocknen) bewirkt keine Konditionierung des zugeführten Luftstroms, sondern dient dazu, benetzte Flächen innerhalb des Hauptwärmetauschers 15 sowie angrenzender Bereiche komplett abzutrocknen. Hierzu wird der Hauptwärmetauscher unter Bereitstellung eines Wärmefluids derart erhitzt, dass jegliche Feuchtigkeit abverdunstet. Dabei kann es vorteilhaft sein, die Ventilatoren 33 mit geringer Drehzahl zu betreiben, um eine gewisse Durchströmung des Zuluftkanals sicherzustellen.

Mit den verschiedenen hier vorgeschlagenen Verbesserungen wird insbesondere auch eine erhebliche Energieeinsparung und damit im Zusammenhang stehend eine erhebliche CO₂-Einsparung erzielt.

Die in der vorliegenden Anmeldung beschriebene Klimatisierungseinrichtung zeichnet sich in bevorzugter Ausgestaltung auch dadurch aus, dass keine Temperatur und Feuchteschichtung in der Zuluft gegeben ist. Außerdem sind sowohl Zuluft als auch Feuchte hochgenau einstellbar.

### Bezugszeichenliste

- 11: Zuluftkanal
- 12: einlassseitiges Ende (Zuluftkanal)
- 13: auslassseitiges Ende (Zuluftkanal)
- 14: Düsenstock
- 15: Hauptwärmetauscher
- 16: erster Anschluss (Hauptwärmetauscher)
- 17: zweiter Anschluss (Hauptwärmetauscher)
- 18: Wärmequelle
- 19: Kältequelle
- 20: Enteisungswärmetauscher
- 21: erster Anschluss (Enteisungswärmetauscher)
- 22: zweiter Anschluss (Enteisungswärmetauscher)
- 23: Fluid-Fluidwärmetauscher
- 24: Wärmezufuhrleitung
- 25: Wärmerückgewinnungseinrichtung
- 26: Wärmerückgewinnungs-Wärmetauscher
- 27: Abluftkanal
- 28: einlassseitiges Ende (Abluftkanal)
- 29: auslassseitiges Ende (Abluftkanal)
- 30: Wärmerückgewinnungs-Zufuhrleitung
- 31: Verschlussklappe
- 32: Filter
- 33: Ventilatoren (Zuluftkanal)
- 34: Nachwärmer
- 35: Ventilatoren (Abluftkanal)
- 36: Verschlussklappe
- 37: Düsenstock (Abluftkanal)
- 38: Wärmezufuhrregelventil
- 39: Kältezufuhrregelventil
- 40: Förderpumpe
- 41: Bypass-Ventil
- 42: Bypass-Leitung
- 43: Einstellventil
- 44: Einstellventil
- 45: Rückführbypassleitung
- 46: Rückführbypassventil
- 47: Umwälzpumpe
- 48: Vorwärmetauscher
- 49: Umschaltorgan
- 50: Umschaltorgan
- 51: (erster) Entkopplungswärmetauscher
- 52: (zweiter) Entkopplungswärmetauscher
- 53: zentrale Steuer- und/oder Auswerteinrichtung
- 54: erste Hochdruckpumpe
- 55: zweite Hochdruckpumpe
- 56: (gemeinsame) Hochdruckpumpe
- 57: Bypass-Ventil (Vorwärmetauscher)
- 58: Vereisungssensor
- 59: Temperaturfühler (Eingangsseite)
- 60: Feuchtefühler (Eingangsseite)
- 61: Temperaturfühler (Ausgangsseite)
- 62: Feuchtefühler (Ausgangsseite)
- 63: Zulauf
- 64: Bypass - Leitung (Vorwärmetauscher)
- 65: (erstes) Befeuchtungs - Regelventil
- 66: (zweites) Befeuchtungs - Regelventil
- 67: Verzweigungspunkt
- 68: Umwälzpumpe
- 69: (erstes) Einstellventil
- 70: (zweites) Einstellventil
- 71: stufenlos steuerbare Hochdruckpumpe

## Patentansprüche

1. Klimatisierungseinrichtung zum Konditionieren eines in einem Zuluftkanal (11) geführten Luftstroms zur Klimatisierung eines Raums, wobei der Zuluftkanal (11) ein einlassseitiges Ende (12) und ein auslassseitiges Ende (13) und einen dazwischen angeordneten Düsenstock (14) zur bedarfsweisen Befeuchtung des Luftstroms aufweist,
**dadurch gekennzeichnet, dass**
- im Zuluftkanal (11) abstromseitig des Düsenstocks (14) ein vom Luftstrom durchströmbar ausgebildeter Hauptwärmetauscher (15) angeordnet ist und Anschlüsse (16, 17) zum Durchleiten eines Wärme- und/oder Kältefluids, das jeweils aus einer Wärmequelle (18) bzw. einer Kältequelle (19) stammt, vorgesehen sind,
- wobei im Zuluftkanal (11) zwischen einlassseitigem Ende (12) und Düsenstock (14) ein mit einer Wärmerückgewinnungseinrichtung (25) in Wirkzusammenhang stehender Vorwärmetauscher (48) angeordnet ist, und
- wobei ein Umschaltorgan (49, 50), insbesondere ein oder mehrere Mehrwegeventile, vorgesehen ist, mit dem sich die von der Wärmerückgewinnungseinrichtung (25) gewonnene Energie wahlweise dem Hauptwärmetauscher (15) und/oder dem Vorwärmetauscher (46) zuführen lässt.

2. Klimatisierungseinrichtung nach Anspruch 1,
- wobei im Zuluftkanal (11) zwischen einlassseitigem Ende (12) und Düsenstock (14) ein vom Luftstrom durchströmbar ausgebildeter Enteisungswärmetauscher (20) vorgesehen ist, und
- wobei sich die von der Wärmerückgewinnungseinrichtung (25) gewonnene Energie wahlweise dem Enteisungswärmetauscher (20) zuführen lässt.

3. Klimatisierungseinrichtung nach Anspruch 1 oder 2,
wobei bei zugeschalteter Wärmerückgewinnungseinrichtung (25) die aus der Wärmerückgewinnungseinrichtung (25) gewonnene Wärme entweder in einem ersten Betriebszustand WRGA1 sowohl dem Hauptwärmetauscher (15) als auch dem Enteisungswärmetauscher (20) und/oder dem Vorwärmetauscher (48) oder in einem Betriebszustand WRGA2 bzw. WRGA3 nur dem Hauptwärmetauscher (15) oder nur dem Enteisungswärmetauscher (20) und/oder dem Vorwärmetauscher (48), zugeführt wird und wobei bei ausgeschalteter Wärmerückgewinnungseinrichtung (25) das mit Wärme aus der Wärmequelle (18) bzw. Kälte aus der Kältequelle (19) beaufschlagte Wärme- bzw. Kältefluid in einem ersten Betriebszustand WRGB1 sowohl dem Hauptwärmetauscher (15) als auch dem Enteisungswärmetauscher (20) und/oder dem Vorwärmetauscher (48) oder in einem Betriebszustand WRGB2 bzw. WRGB3 nur dem Hauptwärmetauscher (15) oder nur dem Enteisungswärmetauscher (20) und/oder dem Vorwärmetauscher (48) zugeführt wird.

4. Klimatisierungseinrichtung nach einem der Ansprüche 1 bis 3,
wobei innerhalb oder außerhalb des Zuluftkanals (11) ein Fluid-Fluidwärmetauscher (23) angeordnet ist, der zur Übertragung von Wärme des Wärmefluids an das Frostschutzwärmefluid ausgebildet ist, wobei der Fluid-Fluidwärmetauscher (23) so ausgebildet ist, dass Wärmefluid und Frostschutzfluid innerhalb des Fluid-Fluidwärmetauschers (23) voneinander getrennt geführt sind.

5. Klimatisierungseinrichtung nach einem der Ansprüche 1 bis 4, **dadurch gekennzeichnet, dass** zwischen Wärmequelle (18) und Hauptwärmetauscher (15) ein erster Entkopplungswärmetauscher (51) und/oder zwischen Kältequelle (19) und Hauptwärmetauscher (15) ein zweiter Entkopplungswärmetauscher (52) vorgesehen ist, um die Klimatisierungseinrichtung von einer Wärmequelle (18) bzw. einer Kältequelle (19) zu entkoppeln.

6. Klimatisierungseinrichtung nach einem der Ansprüche 1 bis 5, **dadurch gekennzeichnet, dass** einige oder alle Stellorgane (38, 39, 41, 43, 44, 49, 50) und/oder einige oder alle Sensoren 58) und/oder einige oder alle Förderorgane (33, 35, 40), wie Ventilatoren oder Pumpen, über ein Bussystem mit einer zentralen Steuer- und/oder Auswerteeinrichtung (53) verbunden sind.

7. Klimatisierungseinrichtung nach einem der Ansprüche 1 bis 6, **dadurch gekennzeichnet, dass** Einstellventile (38, 39) vorgesehen sind, die als kontinuierliche Ventile, insbesondere als Dreiwegeventile, eine Mischung von mit aus der Wärmequelle (18) bzw. Kältequelle (19) mit Wärme bzw. Kälte beaufschlagtem Fluid mit aus dem Hauptwärmetauscher (15) rückgeführtem Fluid gestatten.

8. Klimatisierungseinrichtung nach einem der Ansprüche 1 bis 7, **dadurch gekennzeichnet, dass** die Durchströmungsrichtung des Hauptwärmetauschers (15) bezogen auf eine Luftströmungsrichtung im Zuluftkanal (11) einstellbar (umkehrbar) ist, wobei je nach gewünschtem Betriebszustand eine Durchströmung des Hauptwärmetauschers (15) in Richtung der Luftströmungsrichtung im Zuluftkanal (11) bzw. entgegen der Luftströmungsrichtung einstellbar ist.

9. Klimatisierungseinrichtung nach einem der Ansprüche 1 bis 8, **dadurch gekennzeichnet, dass** die Wärmerückgewinnungseinrichtung (25) einen Abluftkanal (27) mit einem ersten einlassseitigen Ende (28), einem zweiten auslassseitigen Ende (29) und einem dazwischen im Abluftkanal (27) angeordneten, von einem im Abluftkanal (27) geführten Abluftstrom durchströmten Wärmerückgewinnungswärmetauscher (26) umfasst, wobei die Wärmerückgewinnungseinrichtung (25) ausgebildet ist, aus dem Abluftstrom Wärme über die Wärmerückgewinnungs-Wärmetauscher (26) abzuführen und dem Luftstrom im Zuluftkanal (11) zur Verfügung zu stellen.

10. Klimatisierungseinrichtung nach einen der Ansprüche 1-9, **dadurch gekennzeichnet, dass** der Düsenstock (14) im Zuluftkanal (11) und/oder ein im Abluftkanal (27) der Wärmerückgewinnungseinrichtung (25) angeordneter Düsenstock (37) jeweils einzeln oder gemeinsam durch eine Hochdruckpumpe (54 bis 56) mit Befeuchtungsfluid beaufschlagbar ist, wobei die Hochdruckpumpe (54 bis 56) zur Beaufschlagung des Befeuchtungsfluids mit 60 bar und mehr ausgebildet ist, um über die Düsenstöcke (14, 37) feinstvernebelte Tröpfchen als Aerosole auszubringen.

11. Klimatisierungseinrichtung nach einem der Ansprüche 1 bis 10, **dadurch gekennzeichnet, dass** ein Bypassventil (41) und/oder ein Rückführbypassventil (46) und/oder ein Bypassventil (57) vorgesehen ist, um bedarfsweise den Wärmerückgewinnungs-Wärmetauscher (26) und/oder den Fluid-Fluidwärmetauscher (23) und/oder den Vorwärmetauscher (48) zu umgehen.

12. Klimatisierungseinrichtung nach einem der Ansprüche 1 bis 11, **dadurch gekennzeichnet, dass** der Enteisungswärmetauscher (20) dazu ausgebildet und eingerichtet ist, insbesondere ab einer Außentemperatur unterhalb einer festgelegten Grenztemperatur, kontinuierlich durchströmt zu werden.

13. Klimatisierungseinrichtung nach Anspruch 12, **dadurch gekennzeichnet, dass** ein Vereisungssensor (58) zur Erfassung des Volumenstromes des durch den Enteisungswärmetauscher (20) strömende Fluids vorgesehen ist und dass bei Abfall des gemessenen Werts, insbesondere über eine durch Ventile gesteuerte Beimengung eines Wärmefluids, eine Erwärmung des über den Enteisungswärmetauscher (20) geführten Fluids erfolgt.

14. Klimatisierungseinrichtung nach einem der Ansprüche 1 bis 13, **dadurch gekennzeichnet, dass** die Klimatisierungseinrichtung dazu ausgebildet und bestimmt ist, entweder
- komplett ohne spezielles Frostschutzfluid betrieben oder
- bis auf einen zwischen Enteisungswärmetauscher (20) und Fluid-Fluidwärmetauscher (23) vorgesehenen Kreislauf ohne spezielles Frostschutzfluid betrieben und/oder
- komplett mit Frostschutzfluid unter Abtrennung des Frostschutzfluidkreises durch Entkopplungswärmetauscher(51, 52) von einer externen Wärmequelle (18) und/oder einer externen Kältequelle (19) betrieben zu werden.

15. Klimatisierungseinrichtung nach einem der Ansprüche 4 bis 14, **dadurch gekennzeichnet, dass** der Hauptwärmetauscher (15) und der Fluid-Fluidwärmetauscher (23) über eine Wärmezufuhrleitung (24) miteinander in Fluidverbindung stehen, um ein durch den Hauptwärmetauscher (15) geführtes Wärmefluid anschließend über den Fluid-Fluidwärmetauscher (23) zu führen und so dem Frostschutzwärmefluid Wärmeenergie zuzuführen.

16. Klimatisierungseinrichtung nach einem der Ansprüche 4 bis 15, **dadurch gekennzeichnet, dass** eine Wärmerückgewinnungs-Zuführleitung (30) zwischen Fluid-Fluidwärmetauscher (23) und Wärmerückgewinnungs-Wärmetauscher (26) vorgesehen ist, um im Fluid-Fluidwärmetauscher (23) abgekühltes Wärmefluid zum Zwecke der Erwärmung durch den Abluftstrom dem Wärmerückgewinnungs-Wärmetauscher (26) zuzuführen.

17. Verfahren zum Konditionieren eines in einem Zuluftkanal geführten Luftstroms zur Klimatisierung eines Raums, wobei einlassseitig am Zuluftkanal der Zuluftstrom über einen Enteisungswärmetauscher oder einen Vorwärmetauscher auf eine Temperatur > 0 °C erwärmt wird, **dadurch gekennzeichnet, dass** bedarfsweise eine Wärmerückgewinnungseinrichtung zu- oder abschaltbar ist und die aus der Wärmerückgewinnungseinrichtung gewonnene Wärme im Bedarfsfall wahlweise einem nach einer Hochdruckbefeuchtungseinrichtung vorgesehenen Hauptwärmetauscher und/oder dem Enteisungswärmetauscher bzw. dem Vorwärmetauscher zugeführt wird.

18. Verfahren zum Konditionieren eines in einem Zuluftkanal geführten Luftstroms zur Klimatisierung eines Raums, wobei einlassseitig am Zuluftkanal der Zuluftstrom über einen Enteisungswärmetauscher oder einen Vorwärmetauscher auf eine Temperatur > 0 °C erwärmt wird, nach Anspruch 17, **dadurch gekennzeichnet, dass** der Enteisungswärmetauscher mit einem Frostschutzwärmefluid beschickt wird, das über ein vom Frostschutzfluid getrennt geführtes Wärmefluid erwärmt wird.

## Claims

1. Air conditioning device for conditioning an air stream conducted in a supply air duct (11) for climate control in a room, wherein the supply air duct (11) has an inlet-side end (12) and an outlet-side end (13) and a nozzle block (14) arranged therebetween for humidifying the air stream as required, **characterized in that**
- a main heat exchanger (15), designed such that the air stream can flow therethrough, is arranged in the supply air duct (11) downstream of the nozzle block (14), and connections (16, 17) are provided for passing through said main heat exchanger a heating fluid and/or cooling fluid coming respectively from a heat source (18) and/or cold source (19),
- wherein a pre-heat exchanger (48), which is operatively connected to a heat recovery device (25), is arranged in the supply air duct (11) between the inlet-side end (12) and the nozzle block (14), and
- wherein a switching element (49, 50), in particular one or more multiway valves, is provided, by which the energy obtained from the heat recovery device (25) can optionally be supplied to the main heat exchanger (15) and/or to the pre-heat exchanger (46).

2. Air conditioning device according to claim 1,
- wherein a de-icing heat exchanger (20), designed such that the air stream can flow therethrough, is provided in the supply air duct (11) between the inlet-side end (12) and the nozzle block (14), and
- wherein the energy obtained from the heat recovery device (25) can optionally be supplied to the de-icing heat exchanger (20).

3. Air conditioning device according to claim 1 or 2, wherein, when the heat recovery device (25) is switched on, the heat obtained from the heat recovery device (25) is supplied either both to the main heat exchanger (15) and to the de-icing heat exchanger (20) and/or to the pre-heat exchanger (48) in a first operating state WRGA1 or only to the main heat exchanger (15) or only to the de-icing heat exchanger (20) and/or to the pre-heat exchanger (48) in an operating state WRGA2 or WRGA3, respectively, and wherein, when the heat recovery device (25) is switched off, the heating fluid or cooling fluid charged with heat from the heat source (18) or cold from the cold source (19) is supplied both to the main heat exchanger (15) and to the de-icing heat exchanger (20) and/or to the pre-heat exchanger (48) in a first operating state WRGB1 or only to the main heat exchanger (15) or only to the de-icing heat exchanger (20) and/or to the pre-heat exchanger (48) in an operating state WRGB2 or WRGB3, respectively.

4. Air conditioning device according to one of claims 1 to 3, wherein a fluid-fluid heat exchanger (23) is arranged inside or outside the supply air duct (11) and is designed to transfer heat from the heating fluid to the frost protection heating fluid, wherein the fluid-fluid heat exchanger (23) is designed such that heating fluid and frost protection fluid are conducted separately from one another within the fluid-fluid heat exchanger (23).

5. Air conditioning device according to one of claims 1 to 4, **characterized in that** a first decoupling heat exchanger (51) is provided between the heat source (18) and the main heat exchanger (15) and/or a second decoupling heat exchanger (52) is provided between the cold source (19) and the main heat exchanger (15), in order to decouple the air conditioning device from a heat source (18) and/or from a cold source (19).

6. Air conditioning device according to one of claims 1 to 5, **characterized in that** some or all actuating elements (38, 39, 41, 43, 44, 49, 50) and/or some or all sensors (58) and/or some or all conveying elements (33, 35, 40), such as fans or pumps, are connected via a bus system to a central control and/or evaluation device (53).

7. Air conditioning device according to one of claims 1 to 6, **characterized in that** adjusting valves (38, 39) are provided which, as continuous valves, in particular as three-way valves, make it possible for the fluid charged with heat from the heat source (18) or with cold from the cold source (19) to be mixed with fluid returned from the main heat exchanger (15).

8. Air conditioning device according to one of claims 1 to 7, **characterized in that** the throughflow direction of the main heat exchanger (15) is adjustable (reversible) relative to an air flow direction in the supply air duct (11), wherein, depending on the desired operating state, a throughflow through the main heat exchanger (15) can be set in the direction of the air flow direction in the supply air duct (11) or counter to the air flow direction.

9. Air conditioning device according to one of claims 1 to 8, **characterized in that** the heat recovery device (25) comprises an exhaust air duct (27) having a first, inlet-side end (28), a second, outlet-side end (29) and a heat recovery heat exchanger (26) which is arranged therebetween in the exhaust air duct (27) and through which an exhaust air stream conducted in the exhaust air duct (27) flows, wherein the heat recovery device (25) is designed to convey heat away from the exhaust air stream via the heat recovery heat exchanger (26) and to provide said heat to the air stream in the supply air duct (11).

10. Air conditioning device according to one of claims 1 to 9, **characterized in that** the nozzle block (14) in the supply air duct (11) and/or a nozzle block (37) arranged in the exhaust air duct (27) of the heat recovery device (25) can each be supplied, individually or jointly, with humidification fluid by a high-pressure pump (54 to 56), wherein the high-pressure pump (54 to 56) is designed to supply the humidification fluid at 60 bar and more in order to discharge finely atomized droplets as aerosols via the nozzle blocks (14, 37).

11. Air conditioning device according to one of claims 1 to 10, **characterized in that** a bypass valve (41) and/or a return bypass valve (46) and/or a bypass valve (57) is provided in order to bypass, as required, the heat recovery heat exchanger (26) and/or the fluid-fluid heat exchanger (23) and/or the pre-heat exchanger (48).

12. Air conditioning device according to one of claims 1 to 11, **characterized in that** the de-icing heat exchanger (20) is designed and configured to be flowed through continuously, in particular with effect from an external temperature below a defined limit temperature.

13. Air conditioning device according to claim 12, **characterized in that** an icing sensor (58) is provided for detecting the volume flow of the fluid flowing through the de-icing heat exchanger (20), and **in that**, in the event of a drop in the measured value, the fluid conducted through the de-icing heat exchanger (20) is heated, in particular by way of a valve-controlled admixture of a heating fluid.

14. Air conditioning device according to one of claims 1 to 13, **characterized in that** the air conditioning device is designed and intended either:
- to be operated entirely without a specific frost protection fluid, or
- to be operated without a specific frost protection fluid apart from a circuit provided between the de-icing heat exchanger (20) and the fluid-fluid heat exchanger (23), and/or
- to be operated entirely with a frost protection fluid, the frost protection fluid circuit being separated from an external heat source (18) and/or from an external cold source (19) by the decoupling heat exchangers (51, 52).

15. Air conditioning device according to one of claims 4 to 14, **characterized in that** the main heat exchanger (15) and the fluid-fluid heat exchanger (23) are fluidically connected to one another via a heat supply line (24) in order to conduct a heating fluid that has been conducted through the main heat exchanger (15) subsequently via the fluid-fluid heat exchanger (23) and thus to supply thermal energy to the frost protection heating fluid.

16. Air conditioning device according to one of claims 4 to 15, **characterized in that** a heat recovery supply line (30) is provided between the fluid-fluid heat exchanger (23) and the heat recovery heat exchanger (26) in order to supply heating fluid that has been cooled in the fluid-fluid heat exchanger (23) to the heat recovery heat exchanger (26) for the purpose of being heated by the exhaust air stream.

17. Method for conditioning an air stream conducted in a supply air duct for climate control in a room, wherein the supply air stream is heated by a de-icing heat exchanger or by a pre-heat exchanger to a temperature > 0°C at the inlet side of the supply air duct, **characterized in that** a heat recovery device can be switched on or off as required, and the heat obtained from the heat recovery device is optionally supplied, as required, to a main heat exchanger provided downstream of a high-pressure humidification device and/or to the de-icing heat exchanger and/or to the pre-heat exchanger.

18. Method for conditioning an air stream conducted in a supply air duct for climate control in a room, wherein the supply air stream is heated by a de-icing heat exchanger or by a pre-heat exchanger to a temperature > 0°C at the inlet side of the supply air duct, according to claim 17, **characterized in that** the de-icing heat exchanger is charged with a frost protection heating fluid, which is heated by a heating fluid that is conducted separately from the frost protection fluid.

## Revendications

1. Installation de climatisation pour le conditionnement d'un flux d'air guidé dans un conduit d'arrivée d'air (11) pour climatiser une pièce, dans laquelle le conduit d'arrivée d'air (11) présente une extrémité d'entrée (12) et une extrémité de sortie (13) et un porte-buse (14) disposé entre elles pour l'humidification du flux d'air en fonction des besoins, **caractérisée en ce que**
- un échangeur de chaleur principal (15) conçu pour être parcouru par le flux d'air est disposé dans le conduit d'arrivée d'air (11) en aval du porte-buse (14) et des raccords (16, 17) sont prévus pour le passage d'un fluide caloporteur et/ou réfrigérant provenant d'une source de chaleur (18) ou d'une source de froid (19) pour chacun,
- un pré-échangeur de chaleur (48) en liaison active avec une installation de récupération de chaleur (25) étant disposé dans le conduit d'arrivée d'air (11) entre l'extrémité d'entrée (12) et le porte-buse (14) et
- un organe de commutation (49, 50), en particulier une ou plusieurs vannes à plusieurs voies, étant prévu pour amener sélectivement l'énergie récupérée par l'installation de récupération de chaleur (25) à l'échangeur de chaleur principal (15) et/ou au pré-échangeur de chaleur (46).
contact

2. Installation de climatisation selon la revendication 1,
- dans laquelle est prévu dans le conduit d'arrivée d'air (11), entre l'extrémité d'entrée (12) et le porte-buse (14), un échangeur de chaleur de dégivrage (20) conçu pour être parcouru par le flux d'air et
- dans laquelle l'énergie récupérée par l'installation de récupération de chaleur (25) peut être amenée sélectivement à l'échangeur de chaleur de dégivrage (20).

3. Installation de climatisation selon la revendication 1 ou 2, dans laquelle, lorsque l'installation de récupération de chaleur (25) est activée, la chaleur récupérée par l'installation de récupération de chaleur (25) est amenée soit, dans un premier état de fonctionnement WRGA1, aussi bien à l'échangeur de chaleur principal (15) qu'à l'échangeur de chaleur de dégivrage (20) et/ou au pré-échangeur de chaleur (48), soit, dans un état de fonctionnement WRGA2 ou WRGA3, seulement à l'échangeur de chaleur principal (15) ou seulement à l'échangeur de chaleur de dégivrage (20) et/ou au pré-échangeur de chaleur (48), et dans laquelle, quand l'installation de récupération de chaleur (25) est désactivée, le fluide caloporteur ou réfrigérant exposé à la chaleur de la source de chaleur (18) ou au froid de la source de froid (19) est amené, dans un premier état de fonctionnement WRGB1, aussi bien à l'échangeur de chaleur principal (15) qu'à l'échangeur de chaleur de dégivrage (20) et/ou au pré-échangeur de chaleur (48), soit, dans un état de fonctionnement WRGB2 ou WRGB3, seulement à l'échangeur de chaleur principal (15) ou seulement à l'échangeur de chaleur de dégivrage (20) et/ou au pré-échangeur de chaleur (48).

4. Installation de climatisation selon l'une des revendications 1 à 3, dans laquelle est prévu, disposé à l'intérieur ou à l'extérieur du conduit d'arrivée d'air (11), un échangeur de chaleur fluide-fluide (23) conçu pour le transfert de la chaleur du fluide caloporteur au fluide caloporteur antigel, l'échangeur de chaleur fluide-fluide (23) étant conformé de telle manière que le fluide caloporteur et le fluide antigel sont acheminés séparément l'un de l'autre à l'intérieur de l'échangeur de chaleur fluide-fluide (23).

5. Installation de climatisation selon l'une des revendications 1 à 4, **caractérisée en ce qu'**il est prévu entre la source de chaleur (18) et l'échangeur de chaleur principal (15) un premier échangeur de chaleur de découplage (51) et/ou entre la source de froid (19) et l'échangeur de chaleur principal (15) un deuxième échangeur de chaleur de découplage (52), afin de découpler l'installation de climatisation d'une source de chaleur (18) ou d'une source de froid (19).

6. Installation de climatisation selon l'une des revendications 1 à 5, **caractérisée en ce que** certains ou tous les organes de réglage (38, 39, 41, 43, 44, 49, 50) et/ou certain ou tous les capteurs (58) et/ou certains ou tous les organes de transport (33, 35, 40), tels que les ventilateurs ou les pompes, sont connectés par un système de bus à une installation centrale de commande et/ou d'analyse (53).

7. Installation de climatisation selon l'une des revendications 1 à 6, **caractérisée en ce que** sont prévues des vannes de réglage (38, 39) conçues comme des vannes de continuité, en particulier des vannes à trois voies, qui permettent un mélange de fluide exposé à la chaleur ou au froid de la source de chaleur (18) ou de la source de froid (19) avec du fluide ramené de l'échangeur de chaleur principal (15).

8. Installation de climatisation selon l'une des revendications 1 à 7, **caractérisée en ce que** le sens de circulation de l'échangeur de chaleur principal (15) est réglable (inversable) par rapport à un sens de circulation de l'air dans le conduit d'arrivée d'air (11) avec la possibilité d'établir, selon l'état de fonctionnement souhaité, une circulation dans l'échangeur de chaleur principal (15) dans le sens de circulation de l'air dans le conduit d'arrivée d'air (11) ou en sens inverse de la circulation de l'air.

9. Installation de climatisation selon l'une des revendications 1 à 8, **caractérisée en ce que** l'installation de récupération de chaleur (25) comprend un conduit d'air sortant (27) avec une première extrémité d'entrée (28), une deuxième extrémité de sortie (29) et un échangeur de chaleur à récupération de chaleur (26) disposé entre celles-ci dans le conduit d'air sortant (27) et parcouru par un flux d'air sortant amené dans le conduit d'air sortant (27), l'installation de récupération de chaleur (25) étant conçue pour extraire la chaleur du flux d'air sortant à l'aide de l'échangeur de chaleur à récupération de chaleur (26) et l'apporter au flux d'air dans le conduit d'arrivée d'air (11).

10. Installation de climatisation selon l'une des revendications 1 à 9, **caractérisée en ce que** le porte-buse (14) dans le conduit d'arrivée d'air (11) et/ou un porte-buse (37) disposé dans le conduit d'air sortant (27) de l'installation de récupération de chaleur (25) peuvent être exposés séparément ou ensemble par une pompe à haute pression (54 à 56) à un fluide d'humidification, la pompe à haute pression (54 à 56) étant conçue pour amener le fluide d'humidification sous 60 bars et plus afin de projeter par les porte-buses (14, 37) des gouttelettes finement nébulisées en aérosols.

11. Installation de climatisation selon l'une des revendications 1 à 10, **caractérisée en ce qu'**une vanne de dérivation (41) et/ou une vanne de dérivation de retour (46) et/ou une vanne de dérivation (57) sont prévues pour contourner, en cas de besoin, l'échangeur de chaleur à récupération de chaleur (26) et/ou l'échangeur de chaleur fluide-fluide (23) et/ou le pré-échangeur de chaleur (48).

12. Installation de climatisation selon l'une des revendications 1 à 11, **caractérisée en ce que** l'échangeur de chaleur de dégivrage (20) est conçu et configuré pour être parcouru par un flux continu, en particulier quand la température extérieure baisse en dessous d'une température limite prédéfinie.

13. Installation de climatisation selon la revendication 12, **caractérisée en ce qu'**un capteur de givrage (58) est prévu pour détecter le débit volumique du fluide circulant à travers l'échangeur de chaleur de dégivrage (20) et **en ce que** le fluide acheminé par l'échangeur de chaleur de dégivrage (20) est réchauffé si la valeur mesurée baisse, en particulier par un ajout de fluide caloporteur régulé par des vannes.

14. Installation de climatisation selon l'une des revendications 1 à 13, **caractérisée en ce que** l'installation de climatisation est construite et conçue
- soit pour fonctionner sans aucun fluide antigel spécial,
- soit pour fonctionner sans fluide antigel spécial à l'exception d'un circuit prévu entre l'échangeur de chaleur de dégivrage (20) et l'échangeur de chaleur fluide-fluide (23),
- soit/et pour fonctionner entièrement avec un fluide antigel, avec un circuit de fluide antigel séparé par des échangeurs de chaleur de découplage (51, 52) d'une source de chaleur externe (18) et/ou d'une source de froid externe (19).

15. Installation de climatisation selon l'une des revendications 4 à 14, **caractérisée en ce que** l'échangeur de chaleur principal (15) et l'échangeur de chaleur fluide-fluide (23) sont reliés l'un à l'autre en communication de fluide par une conduite de transport de chaleur (24) pour amener un fluide caloporteur passé par l'échangeur de chaleur principal (15) vers l'échangeur de chaleur fluide-fluide (23) et apporter ainsi de l'énergie thermique au fluide caloporteur antigel.

16. Installation de climatisation selon l'une des revendications 4 à 15, **caractérisée en ce qu'**une conduite d'arrivée à récupération de chaleur (30) est prévue entre l'échangeur de chaleur fluide-fluide (23) et l'échangeur de chaleur à récupération de chaleur (26) pour amener le fluide caloporteur refroidi dans l'échangeur de chaleur fluide-fluide (23) vers l'échangeur de chaleur à récupération de chaleur (26) afin qu'il soit réchauffé par le flux d'air sortant.

17. Procédé pour le conditionnement d'un flux d'air acheminé dans un conduit d'arrivée d'air en vue de la climatisation d'une pièce, dans lequel, à l'entrée du conduit d'arrivée d'air, le flux d'air entrant est chauffé par un échangeur de chaleur de dégivrage ou un pré-échangeur de chaleur à une température supérieure à 0 °C, **caractérisé en ce qu'**une installation de récupération de chaleur peut être mise en service ou arrêtée selon les besoins et la chaleur récupérée par l'installation de récupération de chaleur peut, si nécessaire, être amenée sélectivement à l'échangeur de chaleur principal prévu en aval d'une installation d'humidification à haute pression et/ou à l'échangeur de chaleur de dégivrage ou à l'échangeur de chaleur de préchauffage.

18. Procédé pour le conditionnement d'un flux d'air acheminé dans un conduit d'arrivée d'air en vue de la climatisation d'une pièce, dans lequel, à l'entrée du conduit d'arrivée d'air, le flux d'air entrant est chauffé par un échangeur de chaleur de dégivrage ou un pré-échangeur de chaleur à une température supérieure à 0 °C, selon la revendication 17, **caractérisé en ce que** l'échangeur de chaleur de dégivrage est rempli d'un fluide caloporteur antigel qui est chauffé par un fluide caloporteur acheminé séparément du fluide antigel.
